# EUROPÄISCHE PATENTANMELDUNG

(11) **EP 1 690 751 A2**
(43) Veröffentlichungstag der Anmeldung: **16.08.2006**
(21) Anmeldenummer: 06001971.8
(22) Anmeldetag: 31.01.2006
(51) Int. Cl.: B60R 21/20

(54) **Baugruppe für ein Fahrzeuglenkrad**

(30) Priorität: 10.02.2005 DE 202005002153 U
(71) Anmelder: TRW Automotive Safety Systems GmbH, 63743 Aschaffenburg (DE)
(72) Erfinder: Fäth, Stefan, 63743 Aschaffenburg (DE); Kienzner, Andreas, 63831 Wiesen (DE); Frisch, Ralph, 63776 Mömbris (DE)
(74) Vertreter: Strass, Jürgen

(57) **Zusammenfassung**

Eine Baugruppe für ein Fahrzeuglenkrad weist ein feststehendes Mittelteil auf. Die Baugruppe umfaßt ein Gassackmodul (10). Am Gassackmodul (10) ist eine Wickelfeder (20) angebracht, die zusammen mit dem Gassackmodul (10) eine vormontierte Montageeinheit bildet.

## Beschreibung

Die Erfindung betrifft eine Baugruppe für ein Fahrzeuglenkrad mit einem feststehenden Mittelteil, wobei die Baugruppe ein Gassackmodul umfaßt.

Bei Lenkrädern mit feststehendem Mittelteil kann auf diesem ein Gassackmodul mit einem Gassack vorgesehen werden, der nicht notwendigerweise symmetrisch zum Drehzentrum der Lenkachse gestaltet sein muß. Da die Orientierung des sich aus dem feststehenden Gassackmodul entfaltenden Gassacks von vornherein feststeht, können asymmetrische Gassackformen mit besseren Rückhalteeigenschaften eingesetzt werden.

Bei der Montage eines solchen Lenkrads ist aber die Installation des Gassackmoduls, insbesondere aufgrund der Verkabelung des Gassackmoduls, problematisch. Für die Verkabelung kann eine Wickelfeder verwendet werden, die an der dem Fahrer zugewandten Oberseite der Lenkradnabe vormontiert wird. (Aufbau und Funktion einer Wickelfeder sind dem Fachmann geläufig und werden deshalb an dieser Stelle nicht näher erläutert.) Für die Befestigung des Lenkrads ist die Zugänglichkeit der Lenkspindel bzw. der Lenkspindelmutter Voraussetzung. Im Falle einer Wickelfeder mit einem geringen Durchmesser ist diese Zugänglichkeit jedoch nicht unbedingt gewährleistet.

Aufgabe der Erfindung ist es, eine Behinderung bei der Montage eines Lenkrads mit einem Gassackmodul und einer Wickelfeder zu vermeiden.

Gelöst wird die Aufgabe durch eine Baugruppe der eingangs genannten Art, bei der am Gassackmodul eine Wickelfeder angebracht ist, die zusammen mit dem Gassackmodul eine vormontierte Montageeinheit bildet. Die Bereitstellung einer Baugruppe, bei der die Wickelfeder am Gassackmodul, also nicht an der Lenkradnabe, vormontiert ist, gewährleistet die freie Zugänglichkeit der Lenkspindel bzw. der Lenkspindelmutter bei der Lenkradmontage. Ein besonderer Vorteil der Erfindung ist darin zu sehen, daß das Gassackmodul als Bestandteil eines feststehenden Mittelteils des Lenkrads ohne Änderung der Schnittstelle Lenksäule-Lenkrad verbaut werden kann.

Weitere Merkmale und Vorteile der Erfindung ergeben sich aus der nachfolgenden Beschreibung eines Ausführungsbeispiels unter Bezugnahme auf die beigefügten Zeichnungen. In den Zeichnungen zeigen:
- Figur 1 eine Seitenansicht einer erfindungsgemäßen Baugruppe; und
- Figur 2 eine perspektivische Ansicht der Baugruppe aus Figur 1.

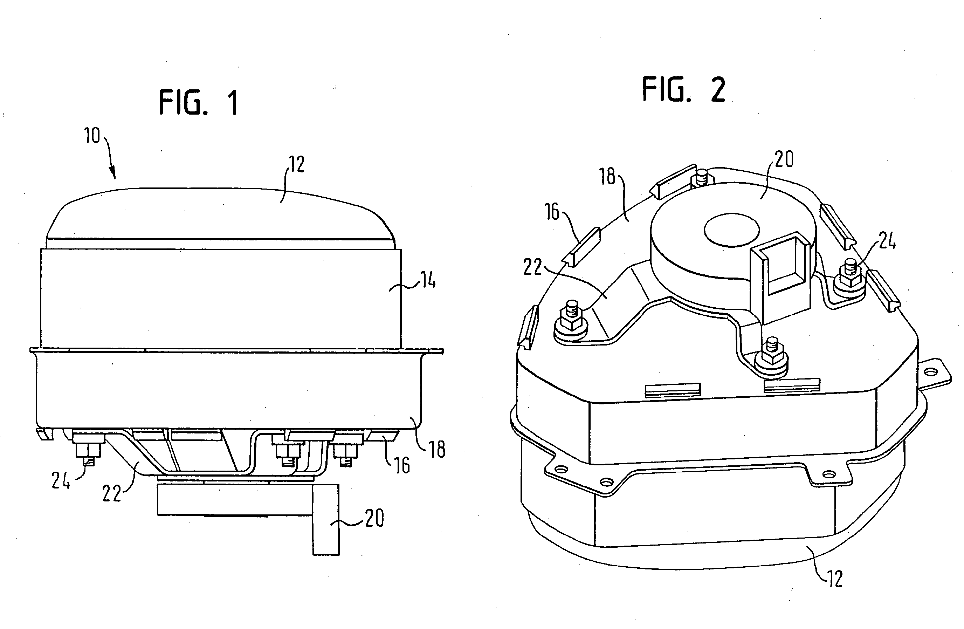

In den Figuren 1 und 2 ist ein Gassackmodul 10 für ein Lenkrad mit einem feststehenden Mittelteil gezeigt. Die dem Fahrer zugewandte Vorderseite (bezogen auf den eingebauten Zustand) des Gassackmoduls 10 ist durch eine Abdeckkappe 12 abgedeckt. Die Abdeckkappe 12 weist eine umlaufende Seitenwand 14 mit Rastfortsätzen 16 auf. Die Rastfortsätze 16 hintergreifen entsprechende Ausnehmungen in einem Gasgeneratorträger 18, so daß die Abdeckkappe 12 fest am Gasgeneratorträger 18 arretiert ist.

Auf der dem Fahrer abgewandten Rückseite des Gassackmoduls 10, genauer gesagt am Gasgeneratorträger 18, ist eine für die Verkabelung des Gassackmoduls 10 vorgesehene Wickelfeder 20 befestigt. Hierzu weist die Wickelfeder 20 Befestigungsfortsätze 22 auf, die mit dem Gasgeneratorträger 18 verschraubt sind. Für die Befestigung der Wickelfeder können vorteilhaft diejenigen Befestigungsstellen 24 gewählt werden, an denen auch ein Gassackhalteblech des Gassackmoduls 10 mit dem Gasgeneratorträger 18 verschraubt ist.

Das Gassackmodul 10 und die daran befestigte Wickelfeder 20 bilden eine vormontierte Montageeinheit, d.h. sie werden bei der Lenkradmontage als Einheit verbaut.

## Patentansprüche

1. Baugruppe für ein Fahrzeuglenkrad mit einem feststehenden Mittelteil, wobei die Baugruppe ein Gassackmodul (10) umfaßt, **dadurch gekennzeichnet, daß** am Gassackmodul (10) eine Wickelfeder (20) angebracht ist, die zusammen mit dem Gassackmodul (10) eine vormontierte Montageeinheit bildet.

2. Baugruppe nach Anspruch 1, **dadurch gekennzeichnet, daß** die Wickelfeder (20) an der dem Fahrer abgewandten Rückseite des Gassackmoduls (10) angeordnet ist.

3. Baugruppe nach Anspruch 2, **dadurch gekennzeichnet, daß** die Wickelfeder (20) an einem Gasgeneratorträger (18) des Gassackmoduls (10) befestigt ist.

4. Baugruppe nach Anspruch 3, **dadurch gekennzeichnet, daß** die Wickelfeder (20) an solchen Befestigungsstellen (24) mit dem Gasgeneratorträger (18) verbunden ist, an denen auch ein Gassackhalteblech des Gassackmoduls (10) mit dem Gasgeneratorträger (18) verbunden ist.
